# EUROPÄISCHE PATENTSCHRIFT

(11) **EP 1 717 128 B1**
(45) Veröffentlichungstag und Bekanntmachung des Hinweises auf die Patenterteilung: **12.11.2008**
(21) Anmeldenummer: 06005155.4
(22) Anmeldetag: 14.03.2006
(51) Int. Cl.: B62D 5/04

(54) **Zahnstangenlenkung mit Antrieb über einen Kugelumlauf**
Servo steering with ball screw
Direction assistée pour un véhicule avec un ensemble vis et écrou à billes

(30) Priorität: 25.04.2005 DE 102005019435
(43) Veröffentlichungstag der Anmeldung: 02.11.2006
(73) Patentinhaber: ThyssenKrupp Presta SteerTec GmbH, 40476 Düsseldorf (DE)
(72) Erfinder: Heck, Hubert, 40629 Düsseldorf (DE); Hebing, Marc-André, Dipl.-Ing, Dipl.wirt.Ing., 46284 Dorsten (DE)
(74) Vertreter: Lenzing, Andreas

(56) Entgegenhaltungen:
- WO-A-01/77545
- DE-A1- 10 016 197
- DE-A1- 19 737 382
- US-A- 4 825 972
- PATENT ABSTRACTS OF JAPAN Bd. 2000, Nr. 21, 3. August 2001 (2001-08-03) -& JP 2001 088717 A (TOYODA MACH WORKS LTD), 3. April 2001 (2001-04-03)

## Beschreibung

Die vorliegende Erfindung betrifft eine Zahnstangenlenkung der Bauart einer elektrischen Servolenkung mit den Merkmalen des Oberbegriffs des Anspruchs 1.

Solche Zahnstangenlenkungen sind bekannt, beispielsweise aus dem Patent US 4,825,972 oder aus der japanischen Patentanmeldung JP 2001-88717A. Die erste Druckschrift zeigt eine elektrisch angetriebene Kraftfahrzeug-Servolenkung, bei der der Servomotor über einen Zahnriemen auf die Kugelmutter eines Kugelumlaufs wirkt. Der Kugelumlauf selbst greift in einem Kugelgewinde an der Zahnstange an. Bei einer Drehung der Kugelmutter um die Längsachse der Zahnstange wird diese in Achsrichtung verfahren. Die zweite Druckschrift zeigt eine ähnliche Kraftfahrzeug-Servolenkung, bei der der Kugelumlauf unmittelbar über einen koaxial zum Kugelumlauf angeordneten Motor angetrieben wird.

Beide Servolenkungen sind manuell über ein Lenkrad und eine Lenksäule betätigbar. Bei beiden Servolenkungen erfolgt diese Betätigung über ein Ritzel und ein in die Zahnstange eingeformtes Zahnsegment, welches mit dem Ritzel kämmt. Der Kugelumlauf und das Lenkritzel sind in einem Lenkungsgehäuse gelagert. Das Kugelgewinde und das Zahnsegment sind in verschiedenen Abschnitten der Zahnstange in Achsrichtung voneinander beabstandet angeordnet.

In der Praxis erfordern Servolenkungen der Bauart mit einem elektrisch angetriebenen Kugelumlauf und einem mit der Lenksäule verbundenen Lenkritzel eine sehr präzise Fertigung. Dennoch kommt es vielfach zu einer unerwünscht hohen Reibung innerhalb des Lenkgetriebes oder zu einer unerwünschten Geräuschentwicklung.

Der Grund für diese Probleme liegt in der mechanischen Überbestimmung der bekannten gattungsgemäßen Servolenkungen. Zum einen ist nämlich der Kugelumlauf im Lenkungsgehäuse gelagert. Dabei ist die Kugelmutter über ein oder zwei Kugellager in Lenkungsgehäuse gelagert. Die Kugelmutter selbst weist ein inneres Kugelgewinde auf, in dem sich die Kugeln des Kugelumlaufs abwälzen. Die Zahnstange weist ein entsprechendes komplementäres äußeres Kugelgewinde auf, in das die Kugeln ebenfalls eingreifen. Die einzelnen Bauelemente, hier die Kugelmutter, die Kugeln und das Kugelgewinde der Zahnstange, sind spielfrei gepaart. Der Kugelumlauf und das in die Zahnstange eingebrachte Kugelgewinde definieren bereits vollständig die Bewegungsachse der Zahnstange. Am anderen Ende des Lenkungsgehäuses ist ebenso spielfrei der Eingriff zwischen dem Lenkritzel und dem Zahnsegment vorgesehen. Der Eingriff der Verzahnung und die Lagerung in diesem Bereich definieren ebenfalls eine Bewegungsachse der Zahnstange. Jede Abweichung der beiden so definierten Achsen voneinander führt zu einer Verspannung innerhalb der Lenkung und folglich zu erhöhten Reibungswerten. Eine minimale Anforderung in der Fertigung ist es deshalb, die Zahnstange einer solchen Servolenkung nach dem Stand der Technik in einer Aufspannung zu fertigen, in der das Kugelgewinde und das Zahnsegment angefertigt werden.

Dennoch sind derartige Lenkungen in der Praxis häufig mit einer hohen inneren Reibung versehen.

Es ist deshalb Aufgabe der vorliegenden Erfindung, eine gattungsgemäße Servolenkung für Kraftfahrzeuge dahingehend zu verbessern, dass auch in einem weniger aufwendigen Fertigungsprozess eine Lenkung mit geringer innerer Reibung erzielt wird.

Diese Aufgabe wird von einer Servolenkung mit den Merkmalen des Anspruchs 1 gelöst.

Weil die Lenksäule über eine Verzahnung mit der Kugelmutter in Eingriff steht, kann das vom Fahrer in das Lenkrad und die Lenksäule eingeleitete Lenkdrehmoment über den Kugelumlauf in die Zahnstange eingeleitet werden. Eine zweite Verzahnung auf der Zahnstange entfällt. Damit entfällt auch die mögliche Ursache für übermäßige Reibung, die in einer mangelhaften Flucht der beiden Achsen der Verzahnungen nach dem Stand der Technik zu sehen ist.

Wenn die Verzahnung ein Kegelradgetriebe mit einem drehfest mit der Lenksäule verbundenen Kegelrad und einer an der Kugelmutter angeordneten Kegelverzahnung ist, können bewährte Bauelemente vorgesehen werden. Insbesondere kann die Kegelverzahnung an der Kugelmutter einstückig angeformt sein.

Spielfreiheit wird auf einfache Weise erreicht, wenn das Kegelrad auf der Lenksäule verschieblich gelagert ist und in den Eingriff mit der Kegelverzahnung vorgespannt ist.

Vorteilhaft ist es, wenn der Servomotor über einen Zahnriemen mit dem Kugelumlauf gekoppelt ist und insbesondere wenn der Kugelumlauf und der Servomotor in einem gemeinsamen Gehäuse angeordnet sind, das mit einem Lenkgehäuse der Servolenkung vorzugsweise einstückig ist.

Die Fertigung der Kugelmutter kann in einem einfachen Verfahren erfolgen, wenn die Kugelmutter an ihrem äußeren Umfang eine Riemenverzahnung aufweist, die axial neben der Kegelradverzahnung angeordnet ist. Das Auftreten eines Teilungsfehlers während der Fertigung wird ausgeschlossen, wenn die Riemenverzahnung und die Kegelradverzahnung in einer Aufspannung angefertigt sind, insbesondere wenn die Riemenverzahnung und die Kegelradverzahnung in einem Umformvorgang angefertigt sind.

Das Verdrehen der Zahnstange wird auf einfache Weise verhindert, wenn die Spurstangen an den freien Enden der Zahnstange um die Längsachse der Zahnstange drehfest angeordnet sind. Insbesondere kann vorgesehen sein, dass die Spurstangen an den freien Enden der Zahnstange formschlüssig angeordnet sind.

Nachfolgend wird ein Ausführungsbeispiel der vorliegenden Erfindung beschrieben. Es zeigt:

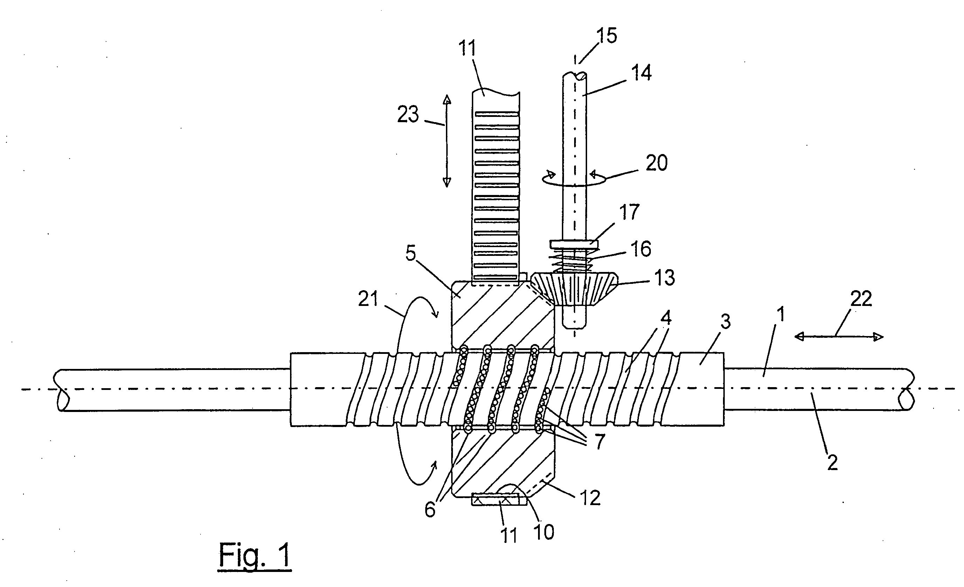

- Fig. 1:: einen schematischen Aufbau der Getriebeteile einer erfindungsgemäßen Servolenkung.

Die Figur 1 zeigt schematisch den Aufbau der wesentlichen Getriebeteile einer erfindungsgemäßen Servolenkung. Im Einzelnen weist die Lenkung eine Zahnstange 1 auf, die in Richtung einer Längsachse 2 verschieblich in einem nicht dargestellten Lenkungsgehäuse gelagerte ist. Die Zahnstange 1 trägt einen Kugelgewindeabschnitt 3, in den ein Kugelgewinde 4 eingeformt ist.

Eine Kugelmutter 5 umgibt den Abschnitt 3, wobei die Kugelmutter 5 an ihrer Innenseite ebenfalls ein Kugelgewinde 6 aufweist. Zwischen dem Kugelgewinde 4 des Abschnitts 3 und dem Kugelgewinde 6 der Kugelmutter 5 liegen zahlreiche Kugeln 7 ein. Diese Kugeln 7 bilden zusammen mit den Kugelgewinden 4 und 6 und mit entsprechenden hier nicht dargestellten Rückführungen einen Kugelgewindeantrieb, wie er an sich bekannt ist.

Die Kugelmutter 5 weist an ihrer Außenseite eine Verzahnung 10 für einen Zahnriemen 11 auf, und der Zahnriemen 11 ist über ein entsprechendes Ritzel eines elektrischen Servomotors geführt und dient zum Antrieb der Kugelmutter. Seitlich in Richtung der Achse 2 neben der Verzahnung 10 ist eine Kegelradverzahnung 12 an der Kugelmutter angeordnet. Die Kegelradverzahnung 12 kämmt mit einer entsprechenden Verzahnung eines Kegelrades 13.

Das Kegelrad 13 wiederum ist auf einer Lenksäule 14 in Richtung einer Drehachse 15 verschieblich gelagert. Dabei drängt eine Schraubenfeder 16 das Kegelrad 13 in den Eingriff mit der Verzahnung 12. Die Schraubenfeder 16 stützt sich an einen umlaufenden Bund 17 der Lenksäule ab.

An ihrem nicht dargestellten freien Ende trägt die Lenksäule 14 in bekannter Weise ein Lenkrad. Zwischen dem Lenkrad und dem Kegelrad 13 können in der Lenksäule noch verschiedene Funktionselemente angeordnet sein wie beispielsweise Verformungselemente, Kardangelenke und insbesondere ein Drehmomentsensor für die Erfassung des am Lenkrad eingeleiteten Drehmoments.

Die beschriebene Lenkung ist für die Verwendung in Kraftfahrzeugen vorgesehen. Dazu wird die Lenkung mit einem geeigneten Lenkungsgehäuse versehen, das zum einen den elektrischen Servomotor, der zum Antrieb des Zahnriemens 11 vorgesehen ist, enthält. Weiter enthält das Lenkungsgehäuse die Lagerung für die Lenksäule 14 sowie die Lagerung für die Zahnstange 1. Die Kugelmutter 5 ist bei einem bevorzugten Ausführungsbeispiel fliegend gelagert, also in Radialrichtung allein durch die Anordnung auf dem Kugelumlauf, der von den Kugelgewinden 4 und 6 sowie den Kugeln 7 definiert wird. In Axialrichtung, also in der Richtung der Längsachse 2 der Zahnstange 1, stützt sich die Kugelmutter 5 an einer geeigneten Lagerung in dem Lenkungsgehäuse ab. Schließlich weist das Lenkungsgehäuse noch die erforderlichen Befestigungspunkte zur Befestigung am Chassis des Kraftfahrzeugs auf.

Im Betrieb wird nun der Fahrer des Kraftfahrzeugs einen Lenkvorgang durch Einleitung eines Drehmoments in die Lenksäule 14 einleiten. Dieses Drehmoment bewirkt eine Drehung der Lenksäule 14, wie sie durch den Doppelpfeil 20 veranschaulicht ist. Das Kegelrad 13 wird von der Druckfeder 16 in Eingriff mit der Verzahnung 12 der Kugelmutter 5 gedrängt. Eine Drehung der Lenksäule 14 bewirkt folglich eine entsprechende Drehung der Kugelmutter 5, wie dies durch den Doppelpfeil 21 veranschaulicht ist. Da die Kugelmutter 5 in Axialrichtung der Längsachse 2 abgestützt ist, führt die Drehung um den Pfeil 21 über das Kugelgewinde zu einer Verlagerung der Zahnstange 1 in Richtung der Längsachse 2, die durch den Doppelpfeil 22 dargestellt ist.

Da die Kugelmutter 5 über eine Verzahnung 10 mit dem Zahnriemen 11 in Verbindung steht, muss bei einer Drehung der Kugelmutter 5 in Richtung des Doppelpfeils 21 der Zahnriemen 11 eine Linearbewegung in Richtung des Doppelpfeils 23 durchführen. Der nicht dargestellte Servomotor, der ebenfalls mit dem Zahnriemen 21 in Eingriff steht, wird dann entsprechend gedreht.

Ein Drehmomentsensor, der der Lenksäule 14 zugeordnet ist, ermittelt in bekannter Weise das Lenkdrehmoment. Dieses Drehmoment soll bestimmte Werte nicht überschreiten. Deshalb ist der Drehmomentsensor mit einer Steuerung verbunden, die den mit dem Zahnriemen 11 in Eingriff stehenden Servomotor derart ansteuert, dass eine Lenkunterstützungskraft oder Lenkhilfskraft erzeugt wird. Diese Lenkhilfskraft wirkt über den Zahnriemen 11 auf die Kugelmutter 5 und damit gemeinsam mit dem über die Lenksäule 14 eingeleiteten manuellen Drehmoment auf den Kugelumlauf und die Zahnstange 1.

Eine Verlagerung der Zahnstange 1 in Richtung des Pfeils 22 führt schließlich (über Spurstangen und andere übliche Komponenten einer gelenkten Fahrzeugachse) zu einem Einschlag der gelenkten Räder und damit zu einem Lenkvorgang des Kraftfahrzeugs.

Die Zahnstange 1 ist im Wesentlichen rotationssymmetrisch zu ihrer Längsachse 2. Die Drehbewegung, die ihr in Richtung des Doppelpfeils 21 durch die Kugelmutter 5 aufgeprägt werden kann, soll deshalb abgefangen werden. Hierfür kann z.B. vorgesehen sein, dass die Spurstangen, die die Verbindung mit den Achsschenkeln gewährleisten, drehfest mit der Zahnstange 1 verbunden sind, beispielsweise über Gabeln oder kardanische Gelenke. Das durch die Kugelmutter 5 aufgeprägte Drehmoment wird dann über die Spurstangen abgestützt. Eine Drehung der Zahnstange 1 findet somit nicht statt. Die eingeleitete Drehung der Kugelmutter 5 führt dann zwangsläufig zu einer Längsverschiebung der Zahnstange 1. Die Neigung der Zahnstange 1, der Rotation der Kugelmutter 5 zu folgen, kann auch über eine nicht rotationssymmetrische Lagerung der Zahnstange 1 in dem Lenkgehäuse oder über eine sonstige Führung erfolgen.

Die in soweit beschriebene Servolenkung zeichnet sich dadurch aus, dass für die Übertragung des manuell eingeleiteten Drehmoments und für die Übertragung der Lenkhilfskraft auf die Zahnstange der gleiche Eingriff benutzt wird. Dieser Eingriff ist als Kugelgewinde eines Kugelumlaufs realisiert. Die Bauform ist besonders kompakt. Die besonderen Vorteile ergeben sich daraus, dass die Verzahnung für den Antrieb der Zahnstange 1, hier das Kugelgewinde 4, während der Fertigung und im Betrieb nicht bezüglich eines zweiten Zahnsegments ausgerichtet werden muss, wie dies bei den bekannten Servolenkungen mit einem elektrisch angetriebenen Kugelumlauf und einem herkömmlichen Eingriff Lenkritzel/Zahnsegment für den Anschluss der Lenksäule der Fall ist. Damit kann die Zahnstange 1 in einem Arbeitsgang mit dem Kugelgewinde 4 versehen werden, der für eine hinreichend gute koaxiale Ausrichtung des Kugelgewindes 4 mit der Längsachse 2 sogt. Fehler in der Ausrichtung zweier Verzahnungen zueinander, die im Stand der Technik zu erhöhter Reibung in der Lenkung führen, werden hiermit konstruktiv vermieden.

Gegenüber den elektrischen Servolenkungen, bei denen die Lenkhilfskraft in die Lenksäule eingeleitet wird, ergeben sich vorteile hinsichtlich des Platzbedarfs und der Möglichkeit, den Servomotor im Bereich des Lenkgetriebes anzuordnen.

## Patentansprüche

1. Servolenkung für ein Kraftfahrzeug,
mit einem Lenkgetriebe, das durch Verlagerung einer über einen Kugelumlauf (3-7) anzutreibenden Zahnstange (1) in einer Axialrichtung (2) der Zahnstange (1) eine Verschwenkung von lenkbaren Fahrzeugrädern bewirkt, wobei der Kugelumlauf (3-7) eine Kugelmutter (5) aufweist, die ein Kugelgewindesegment (4) der Zahnstange (1) koaxial umgibt und über Kugeln (7) mit diesem in Eingriff steht, mit wenigstens einem elektrischen Servomotor, der mit dem Kugelumlauf (3-7) antriebsmäßig verbunden ist, wobei der Servomotor über einen Zahnriemen (11) mit dem Kugelumlauf (3-7) gekoppelt ist,
mit einem von einem Fahrer zu betätigenden Lenkrad, welches über eine Lenksäule (14) mit der Zahnstange (1) derart gekoppelt ist, dass ein Drehmoment an dem Lenkrad eine Kraft an der Zahnstange (1) in Axialrichtung bewirkt, **dadurch gekennzeichnet, dass** die Lenksäule (14) über eine Verzahnung (12, 13) mit der Kugelmutter (5) in Eingriff steht.

2. Servolenkung nach Anspruch 1, **dadurch gekennzeichnet, dass**
die Verzahnung (12, 13) ein Kegelradgetriebe mit einem drehfest mit der Lenksäule (14) verbundenen Kegelrad (13) und einer an der Kugelmutter (5) angeordneten Kegelverzahnung (12) ist.

3. Servolenkung nach einem der vorhergehenden Ansprüche, **dadurch gekennzeichnet, dass** die Kegelverzahnung (12) an der Kugelmutter (5) einstückig angeformt ist.

4. Servolenkung nach einem der vorhergehenden Ansprüche, **dadurch gekennzeichnet, dass** das Kegelrad (13) auf der Lenksäule (14) verschieblich gelagert ist und in den Eingriff mit der Kegelverzahnung (12) vorgespannt ist.

5. Servolenkung nach einem der vorhergehenden Ansprüche, **dadurch gekennzeichnet, dass** der Kugelumlauf (3-7) und der Servomotor in einem gemeinsamen Gehäuse angeordnet sind, das mit einem Lenkgehäuse der Servolenkung vorzugsweise einstückig ist.

6. Servolenkung nach einem der vorhergehenden Ansprüche, **dadurch gekennzeichnet, dass** die Kugelmutter (5) an ihrem äußeren Umfang eine Riemenverzahnung (10) aufweist, die axial neben der Kegelradverzahnung (12) angeordnet ist..

7. Servolenkung nach einem der vorhergehenden Ansprüche, **dadurch gekennzeichnet, dass** die Riemenverzahnung (10) und die Kegelradverzahnung (12) in einer Aufspannung angefertigt sind.

8. Servolenkung nach einem der vorhergehenden Ansprüche, **dadurch gekennzeichnet, dass** die Riemenverzahnung (10) und die Kegelradverzahnung (12) in einem Umformvorgang angefertigt sind.

9. Servolenkung nach einem der vorhergehenden Ansprüche, **dadurch gekennzeichnet, dass** Spurstangen an den freien Enden der Zahnstange (1) um die Längsachse der Zahnstange (1) drehfest angeordnet sind.

10. Servolenkung nach Anspruch 9, **dadurch gekennzeichnet, dass** die Spurstangen an den freien Enden der Zahnstange (1) formschlüssig angeordnet sind.

## Claims

1. Power steering system for a motor vehicle,
comprising a steering gear, which causes a horizontal-swing of steerable vehicle wheels by displacing a gear rack (1), to be driven by means of a ball race (3-7), in an axial direction (2) of the gear rack (1), wherein the ball race (3-7) has a ball nut (5), which coaxially surrounds a threaded ball segment (4) of the gear rack (1) and is engaged therewith by means of balls (7),
comprising at least one electric servo motor which is in driving connection with the ball race (3-7), wherein the servo motor is coupled with the ball race (3-7) by means of a toothed belt (11),
comprising a steering wheel to be operated by a driver, which is coupled with the gear rack (1) by means of a steering column (14) such that a torque on the steering wheel causes a force on the gear rack (1) in the axial direction, **characterized in that** the steering column (14) engages with the ball nut (5) via toothing (12, 13).

2. Power steering system according to Claim 1, **characterized in that** the toothing (12, 13) is a bevel wheel gearing with a bevel wheel (13) connected rotationally secured to the steering column (14) and bevel teeth (12) arranged on the ball nut (5).

3. Power steering system according to any one of the preceding claims, **characterized in that** the bevel teeth (12) are integrally formed on the ball nut (5).

4. Power steering system according to any one of the preceding claims, **characterized in that** the bevel wheel (13) is mounted displaceably on the steering column (14) and is pre-tensioned in mesh with the bevel teeth (12).

5. Power steering system according to any one of the preceding claims, **characterized in that** the ball race (3-7) and the servo motor are arranged in a common housing, which is preferably integral with a steering housing of the power steering system.

6. Power steering system according to any one of the preceding claims, **characterized in that** the ball nut (5) on its outer periphery has belt teeth (10), which are axially arranged near the bevel wheel teeth (12).

7. Power steering system according to any one of the preceding claims, **characterized in that** the belt teeth (10) and the bevel wheel teeth (12) are produced in a work-holding system.

8. Power steering system according to any one of the preceding claims, **characterized in that** the belt teeth (10) and the bevel wheel teeth (12) are produced in a forming process.

9. Power steering system according to any one of the preceding claims, **characterized in that** track rods are arranged rotationally secured at the free ends of the gear rack (1) about the longitudinal axis of the gear rack (1).

10. Power steering system according to Claim 9, **characterized in that** the track rods are arranged positively locked at the free ends of the gear rack (1).

## Revendications

1. Direction assistée pour véhicule automobile,
avec un mécanisme de direction qui provoque par le décalage d'une crémaillère (1) à entraîner par l'intermédiaire d'une vis à billes (3 à 7) dans une direction axiale (2) de la crémaillère (1) un pivotement de roues de véhicule orientables, dans laquelle la vis à billes (3 à 7) présente un écrou sphérique (5) qui entoure de façon coaxiale un segment de vis à billes (4) de la crémaillère (1) et est en prise avec celui-ci par l'intermédiaire de billes (7), avec au moins un servomoteur électrique qui est relié en entraînement à la vis à billes (3 à 7), dans laquelle le servomoteur est couplé par l'intermédiaire d'une courroie dentée (11) avec la vis à billes (3 à 7),
avec un volant à actionner par un conducteur et qui est couplé par l'intermédiaire d'une colonne de direction (14) avec la crémaillère (1) de telle sorte qu'un couple au niveau du volant provoque une force au niveau de la crémaillère (1) dans la direction axiale, **caractérisée en ce que** la colonne de direction (14) est en prise par l'intermédiaire d'une denture (12, 13) avec l'écrou sphérique (5).

2. Direction assistée selon la revendication 1, **caractérisée en ce que** la denture (12, 13) est un engrenage à pignons coniques avec un pignon conique (13) relié de façon verrouillée en rotation à la colonne de direction (14) et une denture conique (12) disposée au niveau de l'écrou sphérique (5).

3. Direction assistée selon l'une quelconque des revendications précédentes, **caractérisée en ce que** la denture conique (12) est rapportée de façon solidaire sur l'écrou sphérique (5).

4. Direction assistée selon l'une quelconque des revendications précédentes, **caractérisée en ce que** le pignon conique (13) est logé de façon mobile sur la colonne de direction (14) et est précontraint en prise avec la denture conique (12).

5. Direction assistée selon l'une quelconque des revendications précédentes, **caractérisée en ce que** la vis à billes (3 à 7) et le servomoteur sont disposés dans un boîtier commun qui est de préférence solidaire d'un boîtier de direction de la direction assistée.

6. Direction assistée selon l'une quelconque des revendications précédentes, **caractérisée en ce que** l'écrou sphérique (5) présente sur sa circonférence extérieure une denture de courroie (10) qui est disposée axialement à côté de la denture de pignon conique (12).

7. Direction assistée selon l'une quelconque des revendications précédentes, **caractérisée en ce que** la denture de courroie (10) et la denture de pignon conique (12) sont fabriquées dans un dispositif de serrage.

8. Direction assistée selon l'une quelconque des revendications précédentes, **caractérisée en ce que** la denture de courroie (10) et la denture de pignon conique (12) sont fabriquées dans une opération de formage.

9. Direction assistée selon l'une quelconque des revendications précédentes, **caractérisée en ce que** des barres d'accouplement sont disposées aux extrémités libres de la crémaillère (1) de façon verrouillée en rotation autour de l'axe longitudinal de la crémaillère (1).

10. Direction assistée selon la revendication 9, **caractérisée en ce que** les barres d'accouplement sont disposées aux extrémités libres de la crémaillère (1) de façon crabotée.
